(19) Europäisches Patentamt

European Patent Office

Office européen des brevets

(11) **EP 1 287 635 B1**

(12) **EUROPEAN PATENT SPECIFICATION**

(45) Date of publication and mention
of the grant of the patent:
**23.11.2005 Bulletin 2005/47**

(21) Application number: **00945718.5**

(22) Date of filing: **07.06.2000**

(51) Int Cl.[7]: **H04L 7/04**

(86) International application number:
**PCT/EP2000/005267**

(87) International publication number:
**WO 2001/095553 (13.12.2001 Gazette 2001/50)**

(54) **METHOD FOR ESTIMATING THE SYMBOL TIMING PHASE AT THE RECEPTION OF DATA SIGNALS**

VERFAHREN ZUR SCHÄTZUNG DER SYMBOLTAKTPHASE BEIM EMPFANG VON DATENSIGNALEN

PROCEDE PERMETTANT D'ESTIMER LA PHASE DE RYTHME DES SYMBOLES A LA RECEPTION DE SIGNAUX DE DONNEES

(84) Designated Contracting States:
**AT BE CH CY DE DK ES FI FR GB GR IE IT LI LU
MC NL PT SE**

(43) Date of publication of application:
**05.03.2003 Bulletin 2003/10**

(73) Proprietor: **Siemens Mobile Communications
S.p.A.
20126 Milano (IT)**

(72) Inventors:
• **GESELL, Axel
D-81549 München (DE)**
• **SEBALD, Georg
D-81375 München (DE)**
• **LANKL, Berthold
D-81375 München (DE)**

(74) Representative: **Heusler, Wolfgang
v. Bezold & Sozien
Patentanwälte
Akademiestrasse 7
80799 München (DE)**

(56) References cited:
**US-A- 5 373 536          US-A- 5 727 032**

• **PATENT ABSTRACTS OF JAPAN vol. 018, no.
240 (E-1545), 9 May 1994 (1994-05-09) -& JP 06
029967 A (MATSUSHITA ELECTRIC IND CO
LTD), 4 February 1994 (1994-02-04)**
• **OERDER M ET AL: "DIGITAL FILTER AND
SQUARE TIMING RECOVERY" IEEE
TRANSACTIONS ON
COMMUNICATIONS,US,IEEE INC. NEW YORK,
vol. 36, no. 5, 1 May 1988 (1988-05-01), pages
605-612, XP000615025 ISSN: 0090-6778 cited in
the application**

**Description**

The invention concerns a method and an apparatus for estimating the symbol timing phase when receiving data signals.

US 5 373 536 discloses a method of synchronizing to a signal for information recovery which can precisely lock an apparatus to an information signal having a sync word in order to permit sampling at the centre of each symbol or bit. Synchronization is obtained by performing a first synchronization routine to synchronize to a sync word. A further synchronization routine is then performed to more precisely synchronize the synch word. The fine synchronization routine includes comparing a stored portion of the sync word to a received portion. By adjusting the timing and then performing additional correlations, the timing for best correlation can be obtained. The bit clock is then adjusted so that subsequent data samples can be taken as close to bit centre as possible in order to recover the transmitted information.

If in some communication system the sent data should be recovered using digital signal processing, an analog-digital converter is needed at the receiver. But the optimal timing instants for sampling the incoming signal are not known from the beginning, generally the sampling raster is shifted by some unknown timing phase compared to the optimal timing instants. The smaller that timing phase delay, the better is the reliability of the detection of the original sent data. Since in addition the performance of other parts of the receiver, like power control, carrier and frequency synchronisation and channel estimation, depends on the symbol timing phase, the quality of the receiver is also affected indirectly by the timing phase delay. Therefore a well working symbol timing synchronisation (i.e. timing-recovery) is crucial in effective communication systems.

There are different principles for estimating the symbol timing phase: (Criterions for comparison: Performance, i.e. bias of the estimates, variance of the estimation error).

A) NDA (non-data-aided): There is not used any knowledge about the sent data. The implementation complexity is generally small in this case, the performance is relatively bad (especially if there is used only a small number of data for estimation) (see e.g. Oerder, Martin; Meyr, Heinrich: Digital Filter and Square Timing Recovery, IEEE Trans. Commun., vol. 36, no. 5, may 1988)

B) DA (data-aided): The estimation is based on a training-sequence (TS), i.e. a sent data sequence, which is known a priori at the receiver (often also the term 'preamble' is used).
On the one hand from literature there are known methods, which work only with a special TS, e.g. a bialternating sequence (e.g. Bolding, Gerald; Cowley, William G.: A Computationally Efficient Method of Timing and Phase Estimation in TDMA Systems Using a Preamble Sequence, Int. Journal of Sat. Comm. IJSCEF, vol. 13, no. 6, 1995). In this case the implementation complexity is in general comparatively low for obtaining high performance in symbol timing phase estimation, but often - due to the chosen TS - the performance of other TS-based units (frequency estimation, channel estimation ...) may not be sufficient (if the same TS is used for all blocks; otherwise the efficiency would be decreased).
On the other hand from literature there are known methods (e.g. Ascheid, G.; Meyr, H.: Maximum Likelihood Detection and Synchronisation by Parallel Digital Signal Processing, IEEE Global Telec. Conf., Atlanta, nov. 1984), which are based on the calculation of the log-likelihood function, respectively more generally of some metric for diverse timing phase delays. By comparing the single metrics the actual timing phase delay could be found. The metric calculation could be carried out parallel or iterative. The implementation complexity is very high in general, so that these methods often could not be used, although the corresponding performance is relatively high.

C) DD (decision-directed): The estimation of the timing phase is based on (preliminary) data-decisions. The performance of this type of methods depends strongly on the 'quality' of those (preliminary) data-decisions. That quality is in general relatively low due to the unknown timing phase delay, and therefore also the estimation of the timing phase shows a comparatively bad performance. Are there used some iterations (preliminary data-decisions - symbol timing phase estimation - improved timing phase estimation ... and so on), the performance could be increased, but the implementation complexity would be increased accordingly.

The object of the present invention is to provide for a DA method, respectively a corresponding apparatus, for estimating the symbol timing phase, with a low implementation complexity and a comparatively high performance.

The said objects are achieved by the timing phase estimation method and apparatus as described in claims 1 and 6, respectively. Further embodiments of the invention are characterised in the dependant subclaims.

In contrast to the above indicated DA-methods, which test several timing phases, selecting the best one by comparing some metrics, the invention comprises a method for calculating directly the timing phase estimate. For that the received signal sequence after the analog-to-digital conversion is being cross-correlated with some part of the a priori known TS. At the output of the correlating means only some part of the output-sequence is considered (i.e. windowing), which corresponds with regard to time to the sent TS. For windowing some synchronising circuit is necessary. For that synchronisation there could be used e.g. the output sequence of the correlating means, respectively that of the subsequent described non-linearity. The output sequence of the correlating means is fed to some non-linearity (NL), the resulting samples are interpreted as samples of a time-continuous signal $s(t)$. Now the location of that signal (concerning its special properties like e.g. centre of gravity or absolute maximum) inside the window is determined, being a criterion for the actual timing phase delay from the optimal sampling instants. From the result the desired estimate is obtained by some scaling.

The chosen part of the TS, which is being cross-correlated with the received signal sequence, has to be stretched by the oversampling factor $\kappa$ of the received signal sequence, i.e. between the single symbols of the TS, respectively its considered part, there have to be inserted $\kappa$-1 zeros in each case. For the determination of the location of s(t) inside the window in accordance to one embodiment of the invention a method based on the calculation of the centre of gravity is used. Another embodiment of the invention is based on the usage of some modification of the discrete Fourier transform, in the following refered to as 'extended discrete Fourier transform' (EDFT).

In the following examples for carrying out the estimation in accordance to the invention are described by some illustrative embodiments, as shown in the accompanying figures:

| | |
|---|---|
| Fig. 1 | Basic principle of a feed-forward timing-recovery based on the estimation of the timing phase delay |
| Fig. 2 | Block diagram illustrating the method for estimating the timing phase, according to the present invention; |
| Fig. 3 | Example for the implementation of a correlating means according to the block diagram illustrated in fig. 2; |
| Fig. 4 | Example for the implementation of a non-linearity according to the block diagram illustrated in fig. 2; |
| Fig. 5 | Example for the implementation of some means for determining the location of $s$(t) inside the window based on the calculation of the centre of gravity, according to the block diagram illustrated in fig. 2; |
| Fig. 6 | Example for the implementation of some means for determining the location of $s(t)$ inside the window using some modified discrete Fourier transform, according to the block diagram illustrated in fig. 2; |
| Figs. 7 and 8 | Signal sequence with and without timing phase delay, before, respectively after the non-linearity. |

In the following the received signal will be considered after down-conversion to base band, after analog-to-digital conversion and after impulse shaping (receive filter). Concerning the type of modulation there do not exist any constraints. It is only assumed that the demodulated received signal is described in the symbol domain (concerning the signal presentation, not the sampling rate). In the case of CPM modulation (continuous phase modulation) as some example it is assumed that the transition to the phase-domain has already taken place before carrying out the timing-recovery. The data are sent block-wise, each block contains some suitable training-sequence. Furthermore the received signal is oversampled, with the oversampling factor $\kappa$ being assumed $\kappa \geq 2$.

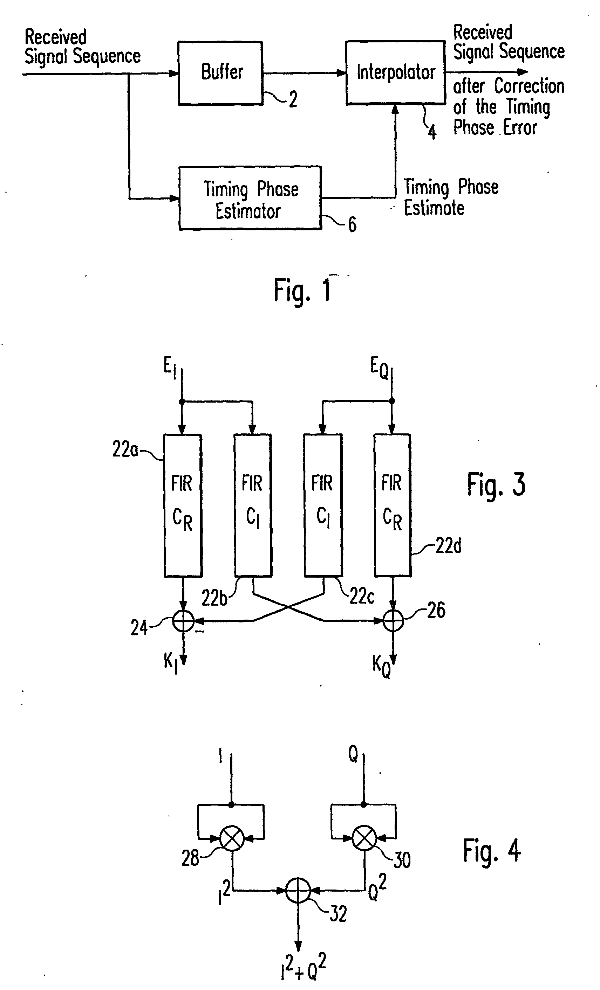

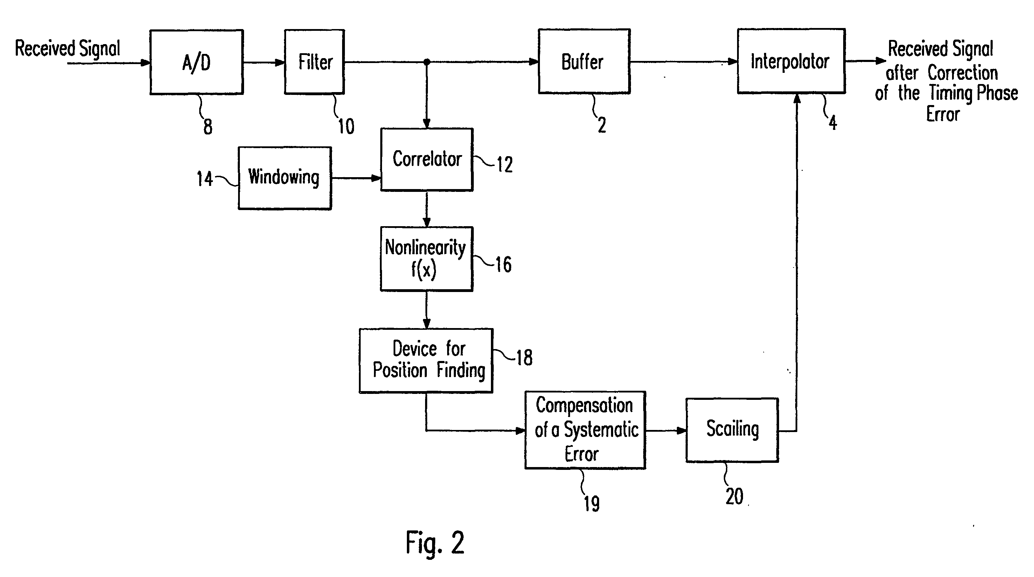

Such a received signal sequence is fed to the arrangement of blocks, illustrated in fig. 1. After some buffer 2 it passes an interpolator 4, which calculates from the actual samples those at the (roughly) optimal timing instants, based on some estimate of the timing phase delay, which is delivered by the estimator 6. By the buffer 2 the input data are delayed according to the processing time of the timing phase estimator. The realisation of the estimator is the object of the invention.

One example for the realisation of such an estimator is described in the following, based on fig. 2: The received signal sequence resulting from the analog-to-digital converter 8 and possibly from some (digital) receive filter 10 is fed to some correlating means 12 for being cross-correlated with some part of the training-sequence, which is known at the receiver. That part of the training-sequence is stretched corresponding to the oversampling factor $\kappa$ (and $\kappa$=2 will be sufficient), i.e. between the single samples there are inserted $\kappa$-1 new samples of value zero. The correlating means 12 could be realised with some FIR filter (finite impulse response), with the coefficients thereof being given by the stretched part of the training-sequence after being complex conjugated. From the output sequence of the correlating means 12 there is taken a sequence consisting of $N$ samples by some means for windowing 14. The window should be chosen, with regard to its beginning, such that in the case of optimal timing phase (i.e. timing phase delay zero) and flat channel (i.e. without intersymbol-interference) the correlation-peak, i.e. the absolute maximum of the absolute values of the output sequence of the correlating means, is located in the centre of the window.

The windowed sequence is fed to some non-linearity 16, described by the function $f(x)$. That function means applying some strictly monotonous function (for all positive real numbers) to the absolute value of the complex valued input $x$. According to the used training-sequence, i.e. to the waveform of the windowed signal sequence, different functions $f(x)$ may turn out to be favoured. Practical is for instance a non-linearity of the form $f(x) = |x|^2$, which could be easily implemented in hardware, what will be demonstrated later on in fig. 4. Passing the non-linearity a real output signal sequence is generated from the complex valued input signal sequence.

The *N* samples at the output of the non-linearity could be interpreted as samples of a signal *s*(*t*) being continuous in time. The location of that signal (concerning its special properties like centre of gravity or absolute maximum) inside the window is some criterion for the actual timing phase delay from the optimal sampling instants and could be determined in different ways. The device, solving this task, is named 'position-finding-module' in the following and indicated by reference number 18 in figure 2. It gives out some estimate of the timing phase delay, which is, if necessary, fed to some compensator 19 to compensate for any systematic estimation error, and thereafter to some means 20 for scaling the resultant value, to obtain the desired estimate of the timing phase delay, that is fed to the interpolator 4 according to fig. 1.

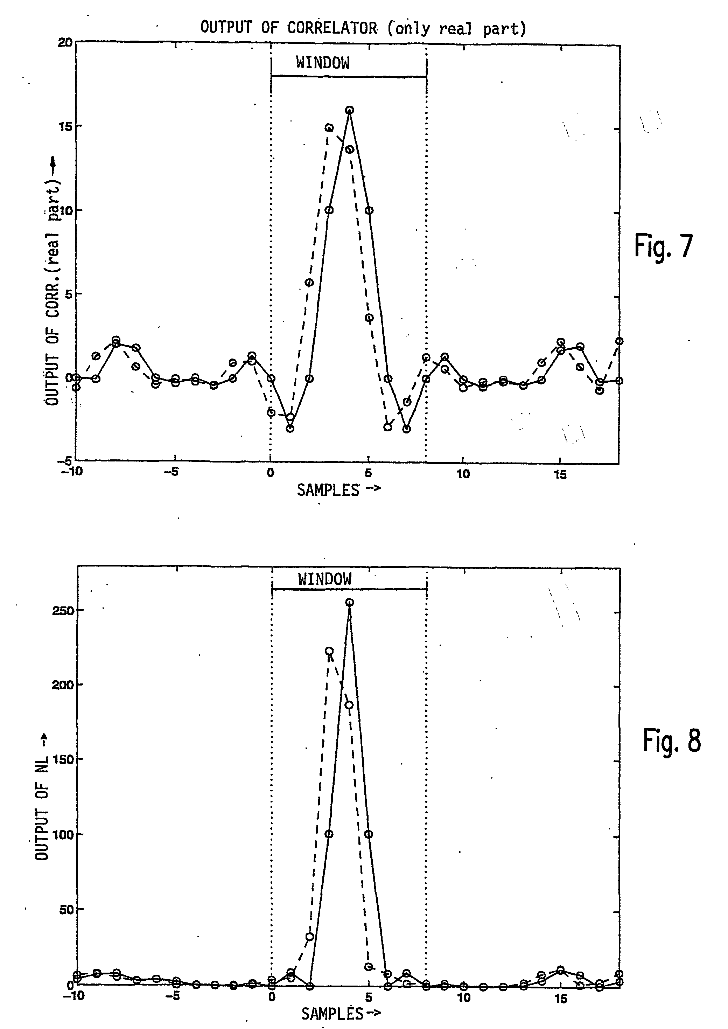

In fig. 7 the samples of the in-phase component (I) after the correlation are illustrated (if some signal is complex valued, its real part is represented in hardware by the in-phase component (I), the imaginary part by the quadrature component (Q)). The dashed version shows the case with some timing phase delay, the other version shows the case of sampling at the optimal instants. Here the window comprises nine samples. Analogue the samples after the non-linearity are illustrated in fig. 8. In the case of optimal sampling the centre of gravity is located in the centre of the window, while in the other case there can be seen some shift. In fig. 7 and fig. 8 a flat channel was applied.

In the following further details and possibilities for the implementation of the invention are demonstrated.

The training-sequence should keep to the subsequently discussed constraints. To be able to detect the location of *s*(*t*) inside the window for all possible timing phase delays with sufficient accuracy, the waveform of *s*(*t*), respectively its distribution of energy, in relation to the correlation-peak, should not depend on the location inside the window. This is for instance the case, if the signal sequence after the correlating means has sample values as small as possible (absolute values) around the border of the window, i.e. the mentioned samples have approximately the value zero. Since the estimation should possibly work without any offset, the signal energy should be distributed as symmetrically as possible around the correlation-peak in the case of optimal sampling and a flat channel. If nevertheless the estimation is biased (e.g. as a consequence of some marginal unsymmetrical distribution of the energy), that error could be possibly accepted. Otherwise there may be possible some compensation. If the received signal sequence is shaped by some filter with symmetrical impulse response (e.g. Nyquist filter), the above mentioned constraints could be kept for a proper choice of the training-sequence.

Concerning the timing phase estimation it is advisable to correlate the received signal sequence only with some part of the training-sequence, in order to avoid that the result of the cross-correlation is influenced negatively by the data which are sent before and after the training-sequence. Some special case of high interest is the use of CAZAC (constant amplitude zero auto-correlation)-sequences. This type of sequences has the property that the (cyclic) auto-correlation yields only zeros beside the correlation-peak. The same result could be get by cross-correlating the original CAZAC-sequence with the periodical continued CAZAC-sequence (of the same phase), i.e. the sequence resulting from repeating the original CAZAC-sequence. If the periodical continued CAZAC-sequence would be sent, the result of the cross-correlation of the received signal sequence with the original sequence would yield the channel impulse response. Therefore in the case of a flat channel and of symmetrical transmit and receive filters (e.g. root-nyquist filters) the windowed signal sequence after the cross-correlation has - like desired - a waveform symmetrical to the correlation-peak. In praxis the original CAZAC-sequence cannot be repeated endless, but it is sufficient to extend the original CAZAC-sequence only by a few samples before and after the original sequence in a periodical sense. Fortunately CAZAC-sequences are also well suited for other receiver parts like frequency estimation or channel estimation. One example is the subsequent CAZAC-sequence:

$$CAZAC = (1+j; -1+j; -1+j; 1-j; 1+j; 1-j; -1+j; -1+j);$$

In this case as training-sequence it could be used

$$TS = (1+j; 1-j; -1+j; -1+j; 1+j; -1+j; -1+j; 1-j; 1+j; 1-j;$$

$$-1+j; -1+j; 1+j; -1+j; -1+j; 1-j),$$

the first four symbols of the CAZAC-sequence are appended at its end, the last four symbols at its beginning. At the receiver the received signal sequence has to be cross-correlated with the original CAZAC-sequence, i.e. it has to be carried out the convolution of the received signal sequence and the complex conjugated original CAZAC-sequence in reverse order:

$$c = (-1-j; -1-j; 1+j; 1-j; 1+j; -1-j; -1-j; 1-j);$$

The already mentioned possibility of implementing the correlating means 12 using FIR filters is illustrated in fig. 3. There are used four FIR filters 22a to 22d, the input of the filters 22a and 22b is connected to the in-phase-component $E_I$ of the received signal sequence, the inputs of the filters 22c and 22d are connected to the quadrature-component $E_Q$ of the received signal sequence. In the case of the above mentioned training-sequence for the cross-correlation the subsequent filter-coefficient set could be used:

$$c = (-1-j; -1-j; 1+j; 1-j; 1+j; -1-j; -1-j; 1-j),$$

respectively

$$C_R = (-1; -1; 1; 1; 1; -1; -1; 1)$$

$$C_I = (-1; -1; 1; -1; 1; -1; -1; -1).$$

The outputs of the filters 22a and 22c serve as inputs of the subtracting means 24 which deliver the in-phase component $K_I$ of the cross-correlation, the outputs of the filters 22b and 22d serve as inputs of the adder 26, delivering the corresponding quadrature component $K_Q$.

The windowing of the output sequence of the correlating means could be controlled by some trigger signal (determining the beginning of the window), for instance. It could be derived e.g. from the frame synchronisation (which is not further considered here) or from the output sequence of the mentioned correlating means, respectively from the output sequence of the non-linearity following the correlating means.

The above mentioned quadratic non-linearity could be realised like shown in fig. 4 by two multipliers 28, 30 and one adder 32. The in-phase component is connected to both inputs of the multiplier 28, delivering the square value $K_I^2$ of this component. The quadrature component is fed to both inputs of the multiplier 30, which delivers the square value $K_Q^2$ of this component. Those two squared signals are the input signals of the adder 32, delivering at its output the real valued sum of the squared inputs $K_I^2 + K_Q^2$.

Choosing the function $f(x)$, which describes the non-linearity in a proper way, the implementation complexity may be reduced; according to the choice of the training-sequence, the performance of the whole apparatus could be influenced by optimising that function.

For getting the location of $s(t)$ inside the window, using the block 18 in compliance with fig. 2, there are shown two possibilities in the following. One possibility is the calculation of the centre of gravity of the N samples $x[k]$, $k = 0$ (1) $N$-1, at the output of the non-linearity:

$$S = \frac{\sum_{k=0}^{N-1} x[k] \cdot k}{\sum_{k=0}^{N-1} x[k]} \tag{1}$$

If the window is chosen in that way, that $N$ is odd and that the absolute maximum of the signal $s(t)$ is located exactly at the centre $t = 0.5NT_s$ (it is assumed $t = kT_s$, $T_s = 1$) of the window in the case of optimal sampling (timing phase delay zero) and flat channel, then the estimate of the timing phase delay is given by

$$\phi = \left(S - \frac{N}{2}\right) \cdot \frac{T_s}{\kappa} \tag{2}$$

$T_s$ is the duration of one symbol interval, $T_s/\kappa$ is therefore that of one sampling interval. Related to one symbol interval (in accordance to the common notation) one gets

$$\frac{\phi}{T_s} = \left(S - \frac{N}{2}\right) \cdot \frac{T_S}{\kappa} \tag{3}$$

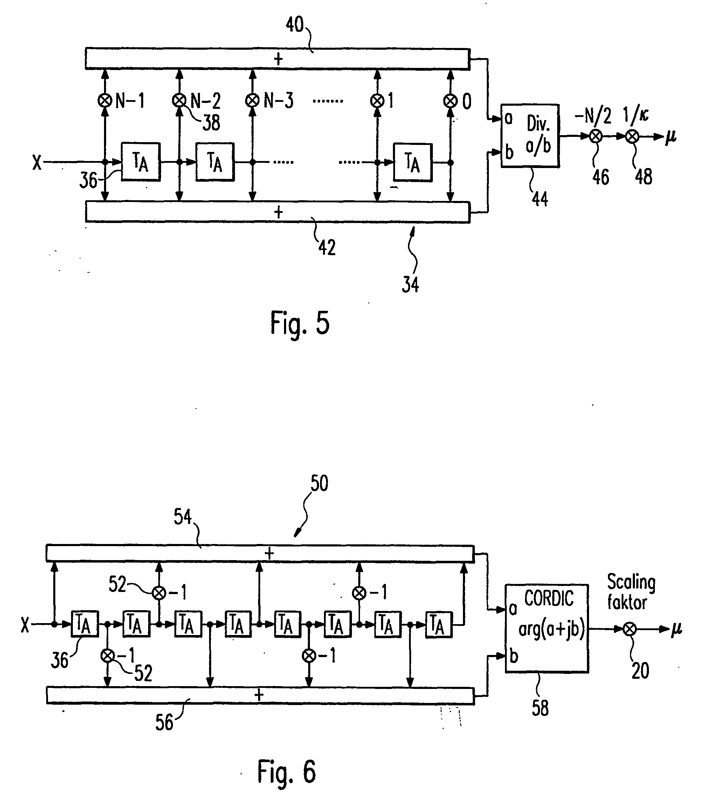

The calculation of the formulas (1), (2) and (3) could be realised - for instance - by using two accumulators or FIR filters, one divider, some adder and one bit-shifter. An example is illustrated in fig. 5. The input signal x is fed to some digital filter 34 with one input and two outputs, consisting of some single delay elements 36 making a delay equal to the sampling period $T_S/\kappa$. The input signal as well as the signals, delayed by a multiple of $T_S/\kappa$ compared to the input signal, are passing some means for weighting 38, being multiplicated by the factors $k = N$-1, $N$-2, ...1, 0. The resultant signals are fed to the adder 40, providing as output the numerator a of equation (1). In addition, the delayed signals are fed directly to a second adder 42 for being summed up to a value $b$, being the denominator of equation (1). The signals a and $b$ are fed to the divider 44, delivering the signal value $S$ of equation (1). In the subsequent adder 46 the value N/2 is being subtracted from $S$, and the result is divided by $\kappa$ fusing the multiplier 48 corresponding to equation (3), providing at the output the timing phase delay related to one symbol interval. In the case of a clever choice of $\kappa$ the multiplier 48 could be realised by a simple bit shifter.

Another possibility of calculating the location of $s(t)$ inside the window is the application of some modified Fourier transform, interpreting the samples after the non-linearity as some part of a periodical signal $s(t)$. That signal part will be approximated by one harmonic of the periodical signal, the location of the harmonic inside the window could be easily calculated using the properties of the DFT (discrete Fourier transform):

First of all some operation similar to the DFT, in the following refered to as 'extended DFT' (EDFT), is being carried out (only at one 'point' $v$):

$$F(v) = \sum_{k=0}^{N-1} x[k] \cdot w^{k \cdot v} \;, \qquad\qquad (4)$$

where

$$w = \exp\left\{ j\frac{2\pi}{M} \right\} , \qquad\qquad (5)$$

$x[k]$ are the samples after the non-linearity at the instants $k = 0, 1, ...., (N$-1). The parameter $v$ could have the values 1, 2, ...., ($M$-1), the parameter $M$ is constrained by $M \le N$. Adjustments leading to a high performance, but keeping the implementation complexity very low are e.g.

$$\kappa = 2, M = 8, N = 9, v = 2 \qquad\qquad (6)$$

or

$$\kappa = 2, M = 4, N = 5, v = 1 \qquad\qquad (7)$$

The equation (4) could be realised by FIR-filters, the coefficients for the mentioned adjustments are taken from the set {1, -1, j, -j}, i.e. there are needed only delay elements (e.g. realised by flip-flops) and adders (respectively subtracting means).

According to the 'shift property' of the Fourier transform the argument of the complex number resulting from the EDFT has to be calculated. For odd values of $v$ an additional correction of the argument by $\pi$ is necessary. That could be realised by multiplying the result of the EDFT with -1 before calculating the angle:

$$\varphi(v) = \arg\{E(v)\}, \qquad\qquad (8)$$

where

$$E(v) = \begin{cases} F(v) \text{ in the case of even } v \\ -F(v) \text{ otherwise} \end{cases} \qquad (9)$$

For the implementation of (8) the CORDIC algorithm could be suggested (e.g. Volder, J. E.: The CORDIC Trigometric Computing Technique, IRE Trans. El. Comp., vol. EC-8, pp 330-334, sept. 1959).

Scaling the result yields the estimate of the timing phase delay related to one symbol interval:

$$\mu(v) = \frac{\varphi(v)N}{2\pi v \kappa}; \qquad (10)$$

With an appropriate choice of the parameters $N$, $\kappa$ and $v$ the equation (10) could be realised by a simple 'bit-shift' operation.

At most a timing phase delay of the value $\pm M/(2v\kappa)$ could be estimated (related to $T_s$). Depending on the properties of the training-sequence the performance of the estimator slightly decreases near the border of the estimating interval.

Some improvement of the EDFT-based method is conceivable by calculating the timing phase delay for different values of $v$ and then carrying out the - maybe weighted - average of the results $\mu(v)$ .

One example for the realisation of the EDFT is illustrated in fig. 6, where the parameters are $N = 9$, $M = 8$ and $v = 2$. The window should be chosen in that way, that the absolute maximum of the signal $s(t)$ is located exactly at the centre of the window in the case of optimal sampling (timing phase delay zero) and flat channel. Also in this case the input signal $x$ is fed to a digital filter 50 with one input and two outputs, consisting of some delay elements 36, each making a delay of one sample period $T_A = T_S/\kappa$ like at the digital filter 34 according to fig. 5. From every second tap the corresponding signal is fed directly, or respectively over an inverter 52 (which inverts the sign), to the adder 54, which delivers the output signal a. From every other tap the corresponding signals are fed to a second adder 56, again with alternating signs, delivering the output signal $b$.

From the complex valued output ($a$+j$b$) the argument has to be determined. Since the parameter v is even in this case, equation (9) has not to be regarded. Determining the argument could be done by using some CORDIC-algorithm in block 58. After that depending on the used interpolator the result of the block 58 possibly has to be scaled, like already shown in fig. 2, by device 20.

The presented method for estimating the timing phase doesn't need a special training-sequence TS (even though not any TS could be used). Which training-sequences are suited and which not could be found e.g. by simulations (evaluating the systematic estimation error as a function of the timing phase). Besides, the length of the training-sequence and the choice of that part, which is directly used for the timing phase estimation, i.e. for cross-correlation, are important degrees of freedom.

If there is some systematic estimation error, resulting from the choice of a certain training-sequence, it could be tried to compensate for it at the output of the estimator (before or after scaling). Provided that the dependence of the estimation error (i.e. the deviation of the estimate $\hat{\varepsilon}$ from the timing phase $\varepsilon$) from the timing phase delay could be expressed by a function $q(\varepsilon)$, $E\{\hat{\varepsilon}-\varepsilon\} = q(\varepsilon)$ , where $E\{ \}$ stands for the statistical expectation, and that the function $q(\varepsilon)$ is invertible, i.e. $q^{-1}(q(\varepsilon)) = \varepsilon$, the error could be completely compensated by $q^{-1}(\hat{\varepsilon})$ in theory. In practice this function would probably have to be approximated. In many cases the approximation $q^{-1}(\hat{\varepsilon}) = c_0 + c_1 \cdot \hat{\varepsilon}$, where $c_0$ and $c_1$ are appropriate coefficients, would be sufficient. This extension, which could be easily implemented, makes the user more free concerning his choice about the TS.

After the cross-correlation there could be used - like already mentioned - another non-linearity instead of $f(x) = |x|^2$. This way the performance may be further improved at the expense of implementation complexity.

Finally there are possibilities for variation depending on the method of determining the location of $s(t)$ inside the window: In all cases (here 'centre of gravity' and 'EDFT') the number of used samples (i.e. size of the window) could be varied. In the case of using the EDFT-method additional the parameters $M$ and $v$ have to be determined. Furthermore the oversampling-factor could be varied. Besides, the estimation method according to the present invention, could be very good combined with other tasks of the receiver. Particularly it will be possible to achieve the frame synchronisation (respectively the burst synchroni-sation), and a coarse power estimation of the input signal (of the timing phase estimator) by evaluating the output signal sequence of the correlating means, or of the non-linearity, respectively.

The invention has a lot of advantages: Compared to the known NDA-methods a significant improvement of the performance is achieved. The performance is related to the systematic estimation error and the variance of the estimate. The complexity is comparable to that of NDA-methods.

Some further advantage is the size of the estimation interval, which could be larger than one symbol interval $T_s$. This way the invention solves some problem of many other known timing phase estimators, which leak from the limitation to the estimating interval $[-T_s/2, T_s/2]$, since there could be happen falsifications from $T_s/2$ to $-T_s/2$ and the other way round, if the received signal is distorted.

Unlike many other methods the oversampling factor 2 is sufficient. This makes possible extremely high processing speeds, and so the invention is very interesting for high-rate communication systems.

Furthermore the estimation does not depend on the amplitude level of the incoming signal. This is an important property, since the estimation and the correction of the signal level before the timing-recovery, i.e. without knowledge of the timing phase delay, may be problematical in many systems.

Moreover the estimation is independent of the carrier phase. Therefore the new method is also applicable to receivers with incoherent detection. In the case of coherent detection it is sufficient to correct the carrier phase after timing-recovery, which is better according to the performance of the whole receiver.

**Claims**

1. A method for estimating the symbol timing phase of a received data signal sequence, based on a training-sequence, in the following referred as TS, which is sent together with the transmitted data blocks, comprising the steps of:

   - oversampling the received signal sequence by an oversampling factor $\kappa$;
   - stretching of the TS by the oversampling factor $\kappa$ of the received signal sequence, by inserting $\kappa$-1 zeros between the symbols of the TS;
   - cross-correlation of at least a part of the stretched TS with the oversampled received signal sequence;
   - application of a non-linearity to a window part of the signal sequence resulting from the cross-correlation;
   - interpretation of the signal sequence resulting from the non-linearity as samples of a signal s(t), continuous in time, and determining a deviation in time of its position from an optimum position by use of predetermined characteristics of s(t) inside said window part as an indication of the timing phase delay;
   - and scaling of the result of said determining step, thereby obtaining the desired estimate of the symbol timing phase.

2. The method in accordance with claim 1, wherein the position of the signal s(t) is determined by means of the centre-of-gravity.

3. The method in accordance with claim 1, wherein the position of the signal s(t) is determined by using a discrete Fourier transform.

4. The method in accordance with claim 1, wherein a systematic error F of the estimate, with $F = q(\varepsilon)$, depending on the timing phase delay $\varepsilon$, is compensated by using the inverse function of $q(\varepsilon)$.

5. The method in accordance with claim 1, comprising calculating the absolute value of a complex valued input signal sequence and then applying, as said non-linearity, a strictly monotonous function.

6. An apparatus for estimating the symbol timing phase of a received data signal sequence, based on a training-sequence, in the following referred as TS, which is sent together with the transmitted data blocks, comprising:

   - means (8) for oversampling the received signal sequence by an oversampling factor $\kappa$;
   - correlating means (12) for cross-correlating at least a part of the TS, being stretched by the oversampling factor $\kappa$ of the received signal sequence by inserting $\kappa$-1 zeros between the symbols of the TS, with the oversampled received signal sequence;
   - non-linearity means (16) having applied thereto a window part of the output sequence of said correlating means (12);
   - means (18) for determining within said window part a deviation in time of the position of a time-continuous signal s(t) from an optimum position by use of predetermined characteristics of said time-continous signal s(t), which signal s(t) is interpreted as to be a signal, which, if being sampled, has the output values of the non-linearity as its samples;
   - and scaling means (20) for providing the desired timing phase estimate from the output of said determining means (18).

**7.** The apparatus in accordance with claim 6, comprising means (18) for determining said deviation in time of the position of s(t) from an optimum position by calculating the centre-of-gravity of s(t).

**8.** The apparatus in accordance with claim 6, comprising means (18) for determining said deviation in time of the position of s(t) from an optimum position by using a discrete Fourier transform.

**9.** The apparatus in accordance with claim 6, comprising means (19) for compensating for a systematic error F of the estimate with F = q($\varepsilon$), depending on the timing phase delay $\varepsilon$, by using the inverse function of q($\varepsilon$).

**10.** The apparatus in accordance with claim 6, comprising means (16) for carrying out a non-linear signalprocessing by applying a strictly monotonous function to the absolute value of complex valued input samples.

**Patentansprüche**

**1.** Verfahren zur Schätzung der Symboltaktphase einer empfangenen Datensignalsequenz aufgrund einer zusammen mit den übertragenen Datenblöcken gesendeten Trainingssequenz, nachfolgend TS genannt, mit den Schritten:

- Überabtastung der empfangenen Signalsequenz mit einem Überabtastfaktor $\kappa$;
- Spreizung der TS um den Überabtastfaktor $\kappa$ der empfangenen Signalsequenz durch Einfügung von $\kappa$ - 1 Nullen zwischen den Symbolen der TS;
- Kreuzkorrelation mindestens eines Teils der gespreizten TS mit der überabgetasteten empfangenen Signalsequenz;
- Applikation einer Nichtlinearität auf einen Fensterteil der bei der Kreuzkorrelation erhaltenen Signalsequenz;
- Interpretation der von der Nichtlinearität erhaltenen Signalsequenz als Abtastwerte eines zeitkontinuierlichen Signals *s(t)* und Bestimmung einer zeitlichen Abweichung seiner Lage von einer Optimallage durch Verwendung vorbestimmter Charakteristika des Signals *s(t)* innerhalb des Fensterteils als Anzeige der Zeitphasenverzögerung;
- und Skalierung des Resultats des Bestimmungsschritts zur Erlangung der gewünschten Schätzung der Symboltaktphase.

**2.** Verfahren nach Anspruch 1, bei dem die Lage des Signals *s(t)* mit Hilfe des Schwerpunkts bestimmt wird.

**3.** Verfahren nach Anspruch 1, bei dem die Lage des Signals *s(t)* unter Verwendung einer diskreten Fourier-Transformation bestimmt wird.

**4.** Verfahren nach Anspruch 1, bei dem ein von der Taktphasenverzögerung $\varepsilon$ abhängiger systematischer Schätzfehler F = q($\varepsilon$) unter Verwendung der Umkehrfunktion von q($\varepsilon$) kompensiert wird.

**5.** Verfahren nach Anspruch 1, bei dem der Absolutwert einer komplexwertigen Eingangssignalsequenz errechnet und dann als die Nichtlinearität eine streng monotone Funktion angewendet wird.

**6.** Vorrichtung zur Schätzung der Symboltaktphase einer empfangenen Datensignalsequenz aufgrund einer zusammen mit den übertragenen Datenblöcken gesendeten Trainingssequenz, nachfolgend TS genannt, mit:

- einer Einrichtung (8) zur Überabtastung der empfangenen Signalsequenz mit einem Überabtastfaktor $\kappa$;
- einer Korrelationseinrichtung (12) zur Kreuzkorrelation zumindest eines Teils der TS, der durch Einfügung von $\kappa$ - 1 Nullen zwischen den Symbolen der TS um den Überabtastfaktor $\kappa$ der empfangenen Signalsequenz gespreizt wird, mit der überabgetasteten empfangenen Signalsequenz;
- einer Nichtlinearität (16), der ein Fensterteil der Ausgangssequenz der Korrelationseinrichtung (12) appliziert wird;
- einer Einrichtung (18), mit der innerhalb des Fensterteils eine zeitlichen Abweichung der Lage eines zeitkontinuierlichen Signals s(t) von einer Optimallage durch Verwendung vorbestimmter Charakteristika des zeitkontinuierlichen Signals *s(t)* bestimmt wird,

wobei das Signal *s(t)* als Signal interpretiert wird, das bei seiner Abtastung die Ausgangswerte der Nichtlinearität als seine Abtastwerte hat;

- und einer Skaliereinrichtung (20) zur Gewinnung der gewünschten Taktphasenschätzung aus der Ausgangsinformation der Bestimmungseinrichtung (18).

**7.** Vorrichtung nach Anspruch 6 mit einer Einrichtung (18) zur Bestimmung der zeitlichen Abweichung der Lage von *s(t)* von der Optimallage durch Berechnung des Schwerpunkts von *s(t)*.

**8.** Vorrichtung nach Anspruch 6 mit einer Einrichtung (18) zur Bestimmung der zeitlichen Abweichung der Lage von *s(t)* von einer Optimallage durch Verwendung einer diskreten Fourier-Transformation.

**9.** Vorrichtung nach Anspruch 6 mit einer Kompensationseinrichtung (19) für einen von der Taktphasenverzögerung $\varepsilon$ abhängigen systematischen Schätzfehler $F = q(\varepsilon)$ durch Verwendung der Umkehrfunktion von $q(\varepsilon)$.

**10.** Vorrichtung nach Anspruch 6 mit einer Einrichtung (16) zur Durchführung einer nichtlinearen Signalverarbeitung durch Applikation einer streng monotonen Funktion auf den Absolutwert komplexwertiger Eingangsabtastproben.


**Revendications**

**1.** Procédé destiné à estimer la phase du rythme de symbole d'une séquence de signaux de données reçus, sur la base d'une séquence d'entraînement, appelée ci-après TS, qui est envoyée en même temps que les blocs de données transmis, comprenant les étapes consistant à :

- suréchantillonner la séquence de signaux reçus grâce à un facteur de suréchantillonnage $\kappa$ ;

- étirer la séquence TS grâce au facteur de suréchantillonnage $\kappa$ de la séquence de signaux reçus, en insérant $\kappa$-1 zéros entre les symboles de la séquence TS ;

- inter-corréler au moins une partie de la séquence TS étirée avec la séquence de signaux reçus suréchantillonnée ;

- appliquer une non-linéarité à une partie de fenêtre de la séquence de signaux qui résulte de l'inter-corrélation ;

- interpréter la séquence de signaux qui résulte de la non-linéarité comme des échantillons d'un signal s(t), continue dans le temps, et déterminer une déviation dans le temps de sa position à partir d'une position optimum en utilisant des caractéristiques prédéterminées du signal s(t) à l'intérieur de ladite partie de fenêtre comme indication du retard de phase du rythme ;

- et changer d'échelle le résultat de ladite étape de détermination, pour obtenir ainsi l'estimation souhaitée de la phase du rythme de symbole.

**2.** Procédé selon la revendication 1, dans lequel la position du signal s(t) est déterminée à l'aide du centre de gravité.

**3.** Procédé selon la revendication 1, dans lequel la position du signal s(t) est déterminée en utilisant une transformée de Fourier discrète.

**4.** Procédé selon la revendication 1, dans lequel une erreur systématique F de l'estimation, avec F = q(e), qui dépend du retard de phase du rythme $\varepsilon$ est compensée en utilisant la fonction inverse de $q(\varepsilon)$.

**5.** Procédé selon la revendication 1, comprenant les étapes consistant à calculer la valeur absolue d'une séquence de signaux d'entrée de valeur complexe puis appliquer, en tant que ladite non-linéarité, une fonction strictement monotone.

**6.** Appareil destiné à estimer la phase du rythme des symboles d'une séquence de signaux de données reçus, sur la base d'une séquence d'entraînement, appelée ci-après TS, qui est envoyée en même temps que les blocs de données transmis ; comprenant :

- un moyen (8) destiné à suréchantillonner la séquence de signaux reçus grâce à un facteur de suréchantillonnage $\kappa$ ;

- un moyen de corrélation (12) destiné à inter-corréler au moins une partie de la séquence TS, qui est étiré grâce au facteur de suréchantillonnage $\kappa$ de la séquence de signaux reçus en insérant $\kappa$-1 zéros entre les symboles de la séquence TS, avec la séquence de signaux reçus suréchantillonnée ;

- un moyen de non-linéarité (16) auquel on applique une partie de fenêtre de la séquence de sortie dudit moyen de corrélation (12) ;

- un moyen (18) destiné à déterminer dans ladite partie de fenêtre un écart de temps de la position d'un signal continu dans le temps s(t) à partir d'une position optimum en utilisant des caractéristiques prédéterminées dudit signal continu dans le temps s(t), lequel signal s(t) est interprété comme étant un signal, qui, si il est échantillonné, a les valeurs de sortie de la non-linéarité comme échantillons ;

- et un moyen de changement d'échelle (20) destiné à fournir l'estimation de phase du rythme souhaité provenant de la sortie dudit moyen de détermination (18).

7. Appareil selon la revendication 6, comprenant un moyen (18) destiné à déterminer ledit écart de temps de la position du signal s(t) à partir d'une position optimum en calculant le centre de gravité du signal s(t).

8. Appareil selon la revendication 6, comprenant un moyen (18) destiné à déterminer ledit écart de temps de la position du signal s(t) à partir d'une position optimum en utilisant une transformée de Fourier discrète.

9. Appareil selon la revendication 6, comprenant un moyen (19) destiné à compenser une erreur systématique F de l'estimation avec F = q($\varepsilon$), en fonction du retard de phase du rythme $\varepsilon$, en utilisant la fonction inverse de q($\varepsilon$).

10. Appareil selon la revendication 6, comprenant un moyen (16) destiné à exécuter un traitement de signal non linéaire en appliquant une fonction strictement monotone à la valeur absolue des échantillons d'entrée de valeur complexe.

Received
Signal Sequence

Buffer
~2

Interpolator
~4

Received
Signal Sequence
after Correction
of the Timing
Phase Error

Timing Phase
Estimator
~6

Timing Phase
Estimate

Fig. 1

$E_I$      $E_Q$

22a

FIR $C_R$

FIR $C_I$

FIR $C_I$

FIR $C_R$

22b    22c    22d

24 ⊕    ⊕ 26

$K_I$      $K_Q$

Fig. 3

I      Q

28 ⊗    ⊗ 30

$I^2$    ⊕    $Q^2$

~32

$I^2 + Q^2$

Fig. 4

Fig. 2

EP 1 287 635 B1

Fig. 5

Fig. 6

OUTPUT OF CORRELATOR (only real part)

Fig. 7

Fig. 8